# FASCICULE DE BREVET EUROPEEN

(11) **EP 2 575 341 B1**
(45) Date de publication et mention de la délivrance du brevet: **16.07.2014**
(21) Numéro de dépôt: 12186153.8
(22) Date de dépôt: 26.09.2012
(51) Int. Cl.: H04M 3/533

(54) **Procédé et dispositif de consultation d'un message vocal**
Verfahren und Vorrichtung zum Anhören einer Sprachmitteilung
Method and device for consulting a voice message

(30) Priorité: 29.09.2011 FR 1158751
(43) Date de publication de la demande: 03.04.2013
(73) Titulaire: Orange, 75015 Paris (FR)
(72) Inventeur: Moncomble, Ghislain, 22300 Lannion (FR)

(56) Documents cités:
- EP-A2- 1 117 242
- US-B1- 7 212 614

## Description

### Domaine de l'invention

L'invention se situe dans le domaine de la messagerie vocale. Elle concerne un dispositif et un procédé de consultation d'un message vocal.

### Art antérieur

Un service de messagerie vocale permet à un appelant de déposer un message vocal à destination d'un appelé sur un serveur de messagerie. L'appelé peut ensuite consulter soit vocalement, soit visuellement, les messages vocaux qui lui ont été envoyés.

Un message vocal peut être composé d'une ou plusieurs composantes vocales qui ont été émises par un ou plusieurs émetteurs distincts. Par exemple, le document EP1117242 A2 propose un procédé permettant à un appelé d'envoyer à un appelant une réponse vocale à un message vocal déposé par l'appelant. L'appelé peut insérer des composantes vocales à différents endroits du message vocal initialement reçu. Un serveur enregistre ces composantes vocales et effectue un montage audio d'un nouveau message vocal contenant le message vocal initialement reçu et les composantes vocales insérées.

### Inconvénient de l'art antérieur

Dans l'art antérieur, le message vocal composé de plusieurs composantes vocales se présente sous la forme d'une seule séquence audio. Un utilisateur destinataire d'un tel message vocal composé ne peut pas interagir de manière indépendante avec un émetteur d'une des composantes vocales du message vocal.

L'utilisateur n'a pas non plus accès à des informations relatives à chaque composante vocale du message vocal reçu ou à chaque émetteur du message vocal.

Ainsi pour un utilisateur utilisant un terminal ayant des capacités limitées, par exemple un terminal ne disposant pas de moyens d'affichage, l'accès à ces informations est encore plus complexe.

Le document US7212614B1 décrit un procédé permettant à un utilisateur émetteur lors du dépôt d'un message vocal de déposer également un document attaché au message vocal. Un utilisateur destinataire peut lors de la consultation du message vocal, demander la réception du document attaché au message vocal. Avant la lecture ou à la suite de la lecture du message vocal, le système de messagerie vocale de l'utilisateur destinataire lui indique par un message additionnel la présence d'un document attaché à ce message vocal. L'utilisateur destinataire peut ensuite choisir la manière de recevoir le document attaché.

### Exposé de l'invention

Un des buts de l'invention est d'apporter des améliorations par rapport à l'état de la technique. Elle propose à cet effet un procédé de consultation d'un message vocal reçu. Le message vocal est composé par au moins une première et une seconde composantes vocales et est associé à un groupe d'informations relatives aux composantes vocales.

Le procédé comprend les étapes de lecture d'au moins une composante vocale du message vocal, de détection d'au moins une interaction utilisateur, l'interaction utilisateur étant concomitante à la lecture de la au moins une composante vocale, d'envoi d'au moins un signal relatif à l'interaction détectée, de réception d'une commande d'une action à effectuer relative à une composante vocale lue du message vocal et à au moins une information du groupe d'informations associé au message vocal.

Ainsi, l'utilisateur peut interagir sur un message vocal composé à partir de n'importe quel type de terminal, même depuis un terminal ne disposant pas de capacités d'affichage, ou disposant de capacités d'affichage limitées. Sans l'invention, avec un tel terminal, l'utilisateur devrait attendre la fin du message pour pouvoir interagir sur ce message. Une autre solution serait d'insérer les informations dans le message vocal en les synthétisant vocalement, ce qui rendrait l'écoute du message longue et fastidieuse pour l'utilisateur et lui fournirait des informations qu'il ne souhaite pas forcément avoir.

Grâce à l'invention, l'utilisateur peut par exemple à sa demande et au cours de la lecture du message vocal, répondre à l'émetteur d'une composante vocale ou obtenir des informations relatives à la composante vocale ou à son émetteur.

Les différents modes ou caractéristiques de réalisation mentionnés ci-après peuvent être ajoutés indépendamment ou en combinaison les uns avec les autres, aux étapes du procédé de consultation défini ci-dessus.

Selon un mode particulier de réalisation de l'invention, l'action à effectuer appartient à un groupe comprenant la lecture d'un flux vocal synthétisé énonçant au moins une information du groupe d'informations associée à une composante vocale lue, la lecture d'un flux vocal synthétisé énonçant les actions possibles applicables à la composante vocale lue, l'ouverture d'une application de communication, l'affichage d'une interface de sélection d'un mode de communication à utiliser pour communiquer avec un utilisateur émetteur de la composante vocale lue, l'affichage d'une interface de sélection d'une action applicable à la composante vocale lue.

L'invention concerne également un procédé de fourniture d'un message vocal à un terminal d'un utilisateur destinataire. Le message vocal est composé par au moins une première et une seconde composantes vocales et est associé à un groupe d'informations relatives aux composantes vocales. Le procédé comprend les étapes d'envoi d'au moins une composante vocale du message vocal, de réception d'au moins un signal relatif à une interaction effectuée par l'utilisateur destinataire, de détermination d'une composante vocale du message vocal sur laquelle s'applique l'interaction effectuée par l'utilisateur destinataire, et d'envoi d'une commande d'une action à effectuer par le terminal de l'utilisateur destinataire, relative à la composante vocale déterminée et à au moins une information du groupe d'informations associé au message vocal.

Le groupe d'informations associé au message vocal permet ainsi de distinguer les composantes vocales dans le message vocal. Un utilisateur peut alors interagir de manière indépendante sur au moins une composante vocale du message vocal afin par exemple d'obtenir des informations sur cette composante vocale ou de répondre à un émetteur de la composante vocale.

Les différents modes ou caractéristiques de réalisation mentionnés ci-après peuvent être ajoutés indépendamment ou en combinaison les uns avec les autres, aux étapes du procédé de fourniture défini ci-dessus.

Selon un mode particulier de réalisation de l'invention, le procédé de fourniture d'un message vocal comprend une étape de synthèse vocale d'au moins une information du groupe d'informations associée à la composante vocale déterminée.

L'utilisateur peut ainsi obtenir à la demande des informations sur une composante vocale. Ces informations n'ont ainsi pas besoin d'être insérées dans le message vocal de manière systématique rendant l'écoute du message vocal longue et fastidieuse pour l'utilisateur. Grâce au procédé de fourniture selon l'invention, l'utilisateur ne reçoit que les informations qu'il souhaite. Selon un mode particulier de réalisation de l'invention, le procédé de fourniture d'un message vocal comprend une étape de détermination d'un groupe d'actions applicables à la composante vocale déterminée.

L'utilisateur peut ainsi par exemple se voir proposer des modes de réponses possibles pour un émetteur d'une composante vocale en fonction des informations disponibles pour cette composante vocale.

Selon un mode particulier de réalisation de l'invention, le signal reçu relatif à une interaction effectuée par l'utilisateur destinataire correspond à un code DTMF entré par l'utilisateur destinataire ou à un signal audio énoncé par l'utilisateur destinataire.

L'utilisateur dispose ainsi de moyens d'interaction simples sur son terminal lors de l'écoute d'un message vocal.

L'invention concerne aussi un dispositif de consultation d'un message vocal reçu. Le message vocal est composé par au moins une première et une seconde composantes vocales et est associé à un groupe d'informations relatives aux composantes vocales. Le dispositif comprend des moyens de lecture d'au moins une composante vocale du message vocal, des moyens de détection d'au moins une interaction utilisateur et concomitante à la lecture de la au moins une composante vocale, des moyens d'envoi d'au moins un signal relatif à l'interaction détectée, des moyens de réception d'une commande d'une action à effectuer relative à une composante vocale lue du message vocal et à au moins une information du groupe d'informations associé au message vocal. L'invention concerne aussi un terminal comprenant un dispositif de consultation tel que décrit ci-dessus.

L'invention concerne également un dispositif de fourniture d'un message vocal à un terminal d'un utilisateur destinataire. Le message vocal est composé par au moins une première et une seconde composantes vocales et est associé à un groupe d'informations relatives aux composantes vocales. Le dispositif comprend des moyens d'envoi d'au moins une composante vocale du message vocal, des moyens de réception d'au moins un signal relatif à une interaction effectuée par l'utilisateur destinataire, des moyens de détermination d'une composante vocale du message vocal sur laquelle s'applique l'interaction effectuée par l'utilisateur destinataire, des moyens d'envoi d'une commande d'une action à effectuer par le terminal de l'utilisateur destinataire, relative à la composante vocale déterminée et à au moins une information du groupe d'informations associé au message vocal.

L'invention concerne également un serveur comprenant un dispositif de fourniture tel que décrit ci-dessus.

L'invention concerne aussi un programme d'ordinateur comportant des instructions pour l'exécution du procédé de consultation d'un message vocal selon l'invention, lorsque le programme est exécuté par un processeur.

L'invention concerne aussi un support d'enregistrement lisible par un processeur sur lequel est enregistré un programme comportant des instructions pour l'exécution du procédé de consultation d'un message vocal selon l'un quelconque des modes particuliers de réalisation de l'invention cités.

L'invention concerne aussi un programme d'ordinateur comportant des instructions pour l'exécution du procédé de fourniture d'un message vocal selon l'invention, lorsque le programme est exécuté par un processeur.

L'invention concerne aussi un support d'enregistrement lisible par un processeur sur lequel est enregistré un programme comportant des instructions pour l'exécution du procédé de fourniture d'un message vocal selon l'un quelconque des modes particuliers de réalisation de l'invention cités.

### Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels:
- la figure 1 illustre des étapes d'un procédé de modification d'un message vocal composé selon un mode particulier de réalisation de l'invention,
- la figure 2 illustre des étapes du procédé de consultation d'un message vocal composé mis en oeuvre par un terminal selon un mode particulier de réalisation de l'invention,
- la figure 3 illustre des étapes du procédé de fourniture d'un message vocal composé mis en oeuvre par un serveur selon un mode particulier de réalisation de l'invention,
- la figure 4 montre la structure d'un dispositif mettant en oeuvre le procédé de consultation d'un message vocal composé selon un mode particulier de réalisation de l'invention,
- la figure 5 montre la structure d'un dispositif mettant en oeuvre le procédé de fourniture d'un message vocal composé selon un mode particulier de réalisation de l'invention,
- la figure 6 montre un environnement de mise en oeuvre du procédé de consultation d'un message vocal composé,
- les figures 7A, 7B et 7C représentent de manière schématique un message vocal composé selon un mode particulier de réalisation de l'invention.

### Description d'un mode particulier de réalisation de l'invention

La présente invention permet la consultation et la modification d'un message vocal composé d'au moins deux composantes vocales émises par au moins un utilisateur émetteur.

Un procédé de modification d'un message vocal composé permet à un utilisateur destinataire d'un message vocal initial de modifier le message vocal initial reçu afin d'ajouter une composante vocale supplémentaire au message vocal initial. Le destinataire du message vocal initial devient alors un émetteur du message vocal composé résultant.

Le message vocal initial peut être un message vocal ne comprenant qu'une composante vocale émise par un unique utilisateur émetteur. Le message vocal initial peut également être un message vocal composé comprenant plus d'une composante vocale émise par un ou plusieurs utilisateurs émetteurs différents.

Le message vocal composé comporte au moins une composante vocale et est associé à un groupe d'informations. Le groupe d'informations associé au message vocal composé peut par exemple comprendre des données associées à une composante vocale du message vocal composé. Ces données peuvent par exemple être une information de position de la composante vocale dans le message vocal composé, une information de durée de la composante vocale, une information d'horodatage de la création et/ou de la dernière modification de la composante vocale, une information relative à l'utilisateur émetteur de la composante vocale par exemple une identité, une adresse de contact ou un numéro de téléphone, une localisation.

Le groupe d'informations peut également comprendre des données globales relatives au message vocal composé. Par exemple, ces données peuvent correspondre à un historique des modifications effectuées sur le message vocal composé.

L'invention concerne un procédé de modification d'un message vocal composé d'au moins une composante vocale et d'un groupe d'informations associé au message vocal.

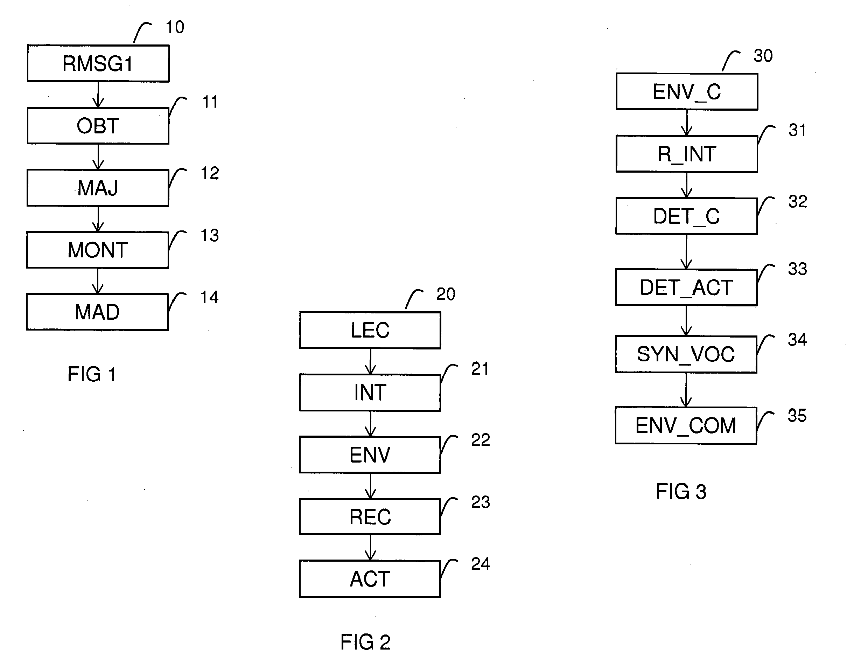

Les étapes du procédé de modification d'un message vocal composé selon un mode particulier de réalisation de l'invention sont illustrées en référence à la figure 1.

Selon un mode particulier de réalisation de l'invention, le procédé de modification d'un message vocal peut être mis en oeuvre par un serveur distant du terminal de l'utilisateur. Ce mode de réalisation est particulièrement avantageux lorsque le terminal de l'utilisateur n'a pas les capacités nécessaires pour mettre en oeuvre les étapes du procédé de modification d'un message vocal et notamment les capacités d'affichage d'un message vocal.

Selon ce mode de réalisation, le procédé de modification d'un message vocal comprend une étape 10 (RMSG1) de réception d'un message vocal et d'un groupe d'informations associé au message vocal par le serveur distant.

En parallèle, le terminal de l'utilisateur reçoit le message vocal et restitue vocalement le message vocal à l'utilisateur.

Le groupe d'information associé au message vocal reçu comporte au moins une information d'horodatage relative à la création du message vocal. Le groupe d'information peut aussi comporter d'autres informations telles que celle décrites ci-dessus. Le message vocal reçu peut être un message vocal issu d'un unique émetteur et non modifié. Le message vocal reçu peut aussi être un message vocal composé comprenant au moins deux composantes vocales issues d'un ou plusieurs émetteurs.

Suite à l'écoute du message vocal, l'utilisateur peut décider d'insérer une ou des composantes vocales dans le message vocal reçu afin de le compléter ou pour répondre à l'utilisateur émetteur ou aux utilisateurs émetteurs du message vocal.

Lorsque l'utilisateur sélectionne la position d'insertion d'une nouvelle composante vocale dans le message vocal via par exemple l'envoi d'un code DTMF (pour Dual Tone Multiple Frequency en anglais), le serveur distant déclenche l'enregistrement (OBT) de la composante vocale émise par l'utilisateur, lors d'une étape 11.

L'utilisateur indique au serveur distant la fin de l'enregistrement de la nouvelle composante vocale par exemple par l'envoi d'un autre code DTMF.

Lors d'une étape 12, le serveur met à jour (MAJ) les informations associées aux composantes vocales du message et les informations globales associées au message vocal. Le serveur met notamment à jour l'information de durée totale du message vocal afin d'ajouter la durée de la nouvelle composante vocale. Le serveur met également à jour les informations de position associées aux composantes vocales du message vocal relativement à la position d'insertion de la nouvelle composante vocale, notamment le rang de la composante vocale et les données de marquage temporel indiquant le début de la composante vocale. Lorsqu'une composante vocale est insérée à l'intérieur d'une composante vocale préexistante, la composante vocale préexistante est coupée en deux sous-composantes vocales et les données de marquage temporel associées à ces deux sous-composantes vocales sont créées et/ou mises à jour relativement à la position de la nouvelle composante vocale.

Le serveur peut également mettre à jour les informations relatives à l'émetteur de la nouvelle composante vocale et par exemple obtenir des informations de localisation via la géo-localisation de son terminal.

Selon un mode particulier de réalisation de l'invention, le serveur peut créer le groupe d'informations associé au message vocal si ces informations n'existaient pas pour le message vocal initialement reçu à l'étape 10. Le serveur détermine alors et stocke des informations relatives à chaque composante vocale du message vocal, par exemple la durée en secondes de la composante vocale, les coordonnées de l'émetteur de cette composante vocale si elles sont disponibles, l'horodatage de dépôt initial du message. D'autres informations peuvent être créées telles que des informations relatives à la composante vocale elle-même, par exemple le texte correspondant si une transcription à l'aide d'une fonctionnalité de reconnaissance vocale est mise en oeuvre, ou si la composante vocale a été générée à partir de texte à l'aide d'une synthèse vocale.

Tout ou partie de ces informations peut être inséré dans le groupe d'informations associé au message vocal.

Selon un mode particulier de réalisation de l'invention, lors d'une étape 13 (MONT), le serveur distant effectue le montage audio du message vocal en concaténant les composantes vocales du message vocal en fonction des informations du groupe d'informations associé au message vocal afin d'obtenir une séquence audio unique comprenant les composantes vocales.

Lors d'une étape 14 (MAD), le serveur met à disposition le message vocal comprenant les composantes vocales du message vocal reçu et la nouvelle composante vocale ainsi que le groupe d'informations associé au message vocal mis à jour. Le message vocal ainsi modifié est mis à disposition d'au moins un utilisateur destinataire par exemple par une sauvegarde sur un serveur interrogeable par le destinataire.

Selon le mode de réalisation de l'invention, le message vocal peut être stocké sur un serveur de messagerie vocale du destinataire sous la forme de séquences audio indépendantes ou sous la forme d'une séquence audio unique. Le groupe d'informations peut par exemple être transmis et stockés selon le protocole HTTP (pour HyperText Transfer Protocol en anglais). Le groupe d'informations associé au message vocal peut être stocké sur le serveur de messagerie vocale du destinataire ou sur un serveur distinct. Lorsqu'il est stocké sur un serveur de données distinct du serveur de stockage des composantes vocales, le groupe d'informations contient alors au moins une référence au message vocal auquel il est associé.

Le procédé de modification d'un message vocal permet ainsi de créer un message vocal composé par au moins deux composantes vocales et d'associer à ce message vocal des informations permettant de distinguer dans le message vocal global les différentes composantes vocales.

La figure 2 illustre des étapes du procédé de consultation d'un message vocal composé mis en oeuvre par un terminal selon un mode particulier de réalisation de l'invention.

Le terminal d'un utilisateur destinataire d'un message vocal reçoit depuis un serveur de messagerie vocale, un flux audio comprenant les composantes vocales du message vocal.

Le terminal de l'utilisateur lit (LEC) lors d'une étape 20 au moins une composante vocale du message vocal reçu.

Au cours de la lecture de la composante vocale, lorsque l'utilisateur souhaite obtenir des informations sur la composante vocale lue ou effectuer une action à partir de cette composante vocale, il compose par exemple sur le clavier de son terminal un code DTMF relatif au service auquel il souhaite accéder pour la composante vocale lue.

Selon un mode particulier de réalisation de l'invention, l'utilisateur peut prononcer un mot-clé relatif au service auquel il souhaite accéder pour la composante vocale lue.

Le terminal de l'utilisateur détecte (INT) une interaction effectuée par l'utilisateur concomitante à la lecture de la composante vocale lors d'une étape 21. Le terminal détermine le type d'interaction effectuée et envoie (ENV) au serveur de messagerie un signal relatif à l'interaction détectée, lors d'une étape 22.

Par exemple, l'utilisateur peut avoir demandé des informations sur la composante vocale, ces informations peuvent correspondre à l'identité de l'émetteur de la composante vocale, à l'horodatage de la création de la composante vocale, à la localisation de l'émetteur de la composante vocale. L'utilisateur peut aussi avoir demandé des informations sur les moyens d'interactions possibles avec l'émetteur de la composante ou sur les actions qu'il est possible d'effectuer à partir de la composante vocale. L'utilisateur peut aussi avoir demandé à effectuer une action à partir de la composante vocale, par exemple s'il connaît déjà le code ou le mot-clé associé à cette action. Par exemple, l'utilisateur peut demander d'envoyer une réponse à l'émetteur de la composante vocale soit en insérant une nouvelle composante vocale dans le message vocal reçu, ou en envoyant un message texte de type SMS (pour Short Message Service en anglais), MMS (pour Multimedia Messaging Service en anglais) ou courriel. L'utilisateur peut aussi demander de transférer la composante vocale à un autre destinataire, ou de supprimer la composante vocale du message vocal.

Lors d'une étape 23, le terminal reçoit (REC) du serveur de messagerie une commande d'une action à exécuter relative à une composante vocale lue du message vocal et à au moins une information du groupe d'informations associé au message vocal. Le terminal exécute (ACT) l'action reçue dans la commande lors d'une étape 24.

Par exemple, si l'utilisateur a demandé l'obtention d'informations sur la composante vocale, l'action à exécuter par le terminal peut correspondre à la lecture d'un flux vocal synthétisé énonçant au moins une information du groupe d'informations associée à une composante vocale lue.

Selon un autre mode particulier de réalisation de l'invention, si l'utilisateur a demandé une liste des actions possibles applicables à une composante vocale lue, l'action à exécuter par le terminal peut correspondre à la lecture d'un flux vocal synthétisé énonçant les actions possibles applicables à la composante vocale lue. Le flux vocal synthétisé peut aussi énoncer le numéro que l'utilisateur doit composer ou le mot-clé que l'utilisateur doit prononcer afin de sélectionner une action correspondante. Lors de la lecture du flux vocal, le serveur attend alors en retour la réception d'une réponse sélectionnée par l'utilisateur.

Selon un autre mode particulier de réalisation de l'invention, l'action à exécuter par le terminal peut aussi correspondre à l'affichage d'une interface de sélection d'une action applicable à la composante vocale. Par exemple, l'interface de sélection propose à l'utilisateur de répondre à un émetteur de la composante vocale, transférer la composante vocale ou le message à un destinataire, supprimer la composante vocale, obtenir des informations relative à la composante vocale. Le terminal peut ensuite envoyer l'action sélectionnée par l'utilisateur au serveur de messagerie afin qu'il mette en oeuvre cette action.

Selon un autre mode particulier de réalisation de l'invention, si l'utilisateur a demandé de répondre à un émetteur de la composante vocale, l'action à exécuter par le terminal peut correspondre à l'ouverture d'une application de communication, par exemple une application permettant d'envoyer des messages de type SMS, MMS ou courriel. En variante, l'action à exécuter par le terminal peut aussi correspondre à l'affichage d'une interface de sélection d'un mode de communication à utiliser pour communiquer. Par exemple, l'interface de sélection propose à l'utilisateur de répondre à un émetteur par SMS, MMS, courriel ou par message vocal.

Selon un autre mode particulier de réalisation de l'invention,, l'action à exécuter par le terminal peut aussi correspondre à l'affichage d'une interface de sélection d'un destinataire auquel transférer la composante vocale.

La figure 3 illustre des étapes du procédé de fourniture d'un message vocal composé mis en oeuvre par un serveur selon un autre mode particulier de réalisation de l'invention.

Après réception d'une demande de consultation d'un message vocal en provenance du terminal d'un utilisateur destinataire du message vocal, le serveur de messagerie vocale envoie (ENV_C) au moins une composante vocale du message vocal au terminal lors d'une étape 30.

En variante, le serveur envoie aussi un flux vocal préenregistré à lire par le terminal afin d'informer l'utilisateur du terminal des interactions possibles sur le message vocal lu.

En variante, ce flux vocal peut ne pas être envoyé systématiquement à l'utilisateur à chaque consultation de ses messages vocaux. Le flux vocal peut par exemple être diffusé un maximum de 10 fois à l'utilisateur ou n'être rediffusé que si l'utilisateur ne l'a pas entendu depuis plus d'un mois. Le serveur reçoit (R_INT) ensuite lors d'une étape 31 un signal relatif à une interaction effectuée par l'utilisateur destinataire. Le serveur détermine à partir du signal reçu quel service a été demandé par l'utilisateur.

Lors d'une étape 32, le serveur détermine (DET_C) la composante vocale du message vocal sur laquelle s'applique l'interaction effectuée par l'utilisateur destinataire, à partir du groupe d'informations associé au message vocal. Pour cela, le serveur mesure l'instant d'interaction de l'utilisateur à partir de l'instant de réception du signal reçu et du début du message vocal.

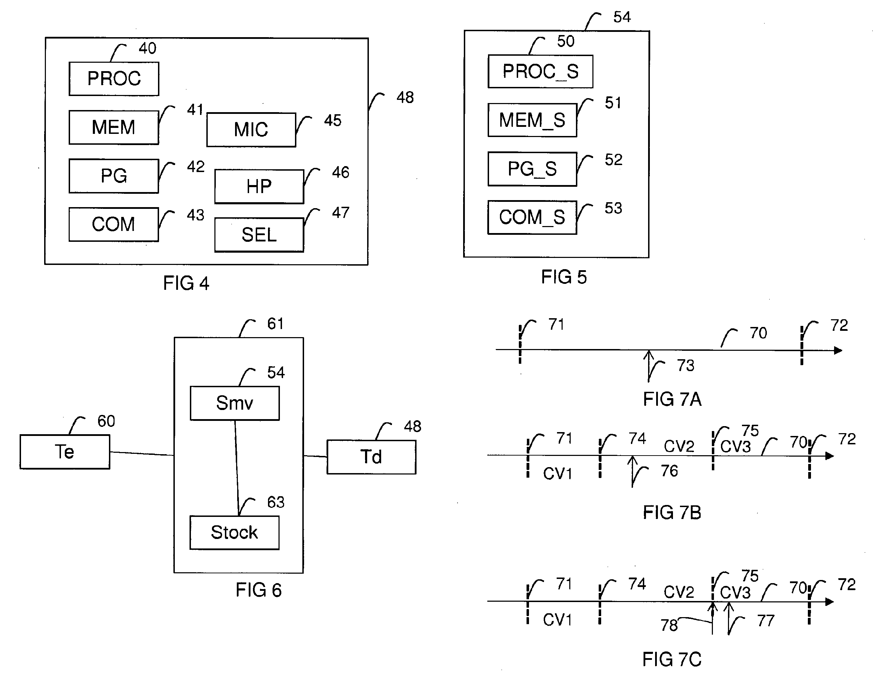

En référence à la figure 7A, le message vocal 70 lu par le terminal de l'utilisateur est identifié au niveau du serveur par les marqueurs temporels de début 71 et de fin 72 du message. La durée du message vocal est par exemple de 24 secondes. Lors de l'envoi du message vocal, le serveur a par exemple déclenché un chronomètre. Ce chronomètre est réinitialisé à zéro à la fin de la consultation de chaque message.

Le serveur reçoit un signal d'interaction utilisateur à un instant temporel 73 du message vocal correspondant à la position du chronomètre à 10 secondes, lors de la réception du signal d'interaction utilisateur.

Selon un mode particulier de réalisation de l'invention, le chronomètre peut être mis en oeuvre au niveau du terminal de l'utilisateur, le serveur reçoit alors en plus du signal d'interaction un indicateur de temps d'interaction relativement à la lecture du message vocal.

Selon un mode particulier de réalisation de l'invention, le serveur prend en compte un délai du au temps de réponse du procédé et/ou de temps de transfert des composantes vocales au terminal et/ou de temps de transfert du signal depuis le terminal.

Selon un autre mode particulier de réalisation de l'invention, le serveur prend en compte le temps de réaction de l'utilisateur.

En variante, le serveur peut aussi prendre en compte le temps de lecture du flux audio préenregistré envoyé avant le message vocal.

En référence à la figure 7B, l'instant d'interaction corrigé calculé par le serveur est alors l'instant temporel 73 auquel ont été soustraites quelques millisecondes de délai de latence. L'instant d'interaction corrigé utilisé par le serveur est alors l'instant temporel 76 correspondant à la position du chronomètre à 9.5 secondes.

A partir de cet instant d'interaction, le serveur détermine la composante vocale dont les données de marquage temporel comprennent l'instant d'interaction. Dans l'exemple de la figure 7B, le message vocal comprend trois composantes vocales CV1, CV2 et CV3 dont les bornes temporelles sont identifiées par les marqueurs temporels 71, 74, 75 et 72 correspondant respectivement aux positions temporelles 0, 4, 14 et 24 secondes. Ainsi dans cet exemple, le serveur détermine que l'instant temporel 76 est compris entre les positions temporelles 74 et 75 et que donc l'utilisateur a souhaité interagir sur la composante vocale CV2.

Selon un mode particulier de réalisation de l'invention, en référence à la figure 7C, l'utilisateur interagit à l'instant temporel 77 correspondant à 15 secondes du chronomètre. L'interaction utilisateur survient dans un délai très court après la fin d'une composante vocale CV2 située par exemple à 14 secondes. L'instant d'interaction corrigé 78 calculé par le serveur est alors positionné à 14.5 secondes. L'instant d'interaction corrigé 78 se situe sur une plage de temps, par exemple de 1 seconde, concomitante aux plages de temps correspondant aux composantes vocales CV2 et CV3. Le serveur peut alors demander à l'utilisateur de préciser sur quelle composante vocale il a souhaité interagir, par exemple en revoyant un extrait à lire par le terminal des deux composantes vocales. En variante, le serveur peut sélectionner une des deux composantes vocales et demander une confirmation à l'utilisateur.

Lorsque l'instant d'interaction ne correspond pas à une composante vocale, par exemple si l'utilisateur a interagit après la fin de la dernière composante du message vocal, l'interaction effectuée par l'utilisateur correspond à une interaction sur le message vocal global.

Les étapes suivantes en référence à la figure 3 s'appliquent indifféremment à la composante vocale déterminée ou au message vocal global selon le résultat obtenu à l'étape 32.

Selon un mode particulier de réalisation de l'invention, le serveur détermine (DET_ACT) lors d'une étape 33, un groupe d'actions applicables à la composante vocale déterminée à l'étape 32. Le serveur établit la liste des actions possibles applicables à la composante vocale déterminée en fonction du groupe d'information associé au message vocal et notamment en fonction des informations disponibles qui sont associées à la composante vocale déterminée. Par exemple, si l'identité de l'émetteur et des coordonnées pour le joindre, telles que par exemple un numéro de téléphone, une adresse de courriel, ou bien un identifiant d'utilisateur d'une application de réseau social, sont disponibles, le serveur détermine qu'une action possible est d'envoyer une réponse à l'émetteur de la composante vocale.

D'autres actions possibles peuvent par exemple être de transférer la composante vocale à un autre destinataire si la composante vocale n'est pas associée à une information de confidentialité, de supprimer la composante vocale du message vocal, ajouter une composante vocale.

Selon un autre mode particulier de réalisation de l'invention, en fonction du type de coordonnées disponibles pour l'émetteur de la composante vocale, le serveur établit une liste des modes de communication possibles pour que l'utilisateur destinataire communique avec l'émetteur de la composante vocale.

Selon un autre mode particulier de réalisation de l'invention, lors d'une étape 34, le serveur effectue (SYN_VOC) une synthèse vocale des informations du groupe d'informations qui sont associées à la composante vocale déterminée. Par exemple, si l'utilisateur a demandé d'obtenir des informations sur la composante vocale, le serveur peut ainsi lui fournir un flux audio énonçant les informations disponibles, telles que par exemple l'identité de l'émetteur, son numéro de téléphone. En variante, lorsque de nombreuses informations associées à la composante sont disponibles, le serveur peut mettre en oeuvre un procédé de type IVR (pour Interactive Voice Response en anglais ou Serveur Vocal Interactif en français) afin de demander à l'utilisateur de préciser les informations qu'il souhaite obtenir, par exemple horodatage, identité, localisation.

Lors d'une étape 35, le serveur envoie (ENV_COM) une commande d'une action à effectuer par le terminal de l'utilisateur destinataire. Cette action est déterminée en fonction de la demande effectuée par l'utilisateur lors de l'interaction utilisateur mise en oeuvre sur son terminal et en fonction de la composante vocale déterminée.

Si la demande de l'utilisateur n'est pas autorisée ou si aucune information associée à la composante vocale déterminée n'est disponible, le serveur envoie une commande relative à la lecture d'un flux audio énonçant l'impossibilité de répondre à la demande de l'utilisateur.

Selon un mode particulier de réalisation de l'invention, si l'utilisateur a demandé de répondre au message vocal, le serveur peut envoyer une commande au terminal pour établir une communication avec l'émetteur de la composante vocale ou du message vocal ou ouvrir l'application de saisie de SMS ou MMS en renseignant automatiquement les champs de coordonnées du correspondant.

Selon un autre mode particulier de réalisation de l'invention, le serveur peut mettre en oeuvre un procédé de type IVR pour faire préciser à l'utilisateur le mode de communication avec lequel il souhaite répondre à l'émetteur.

Selon un autre mode particulier de réalisation de l'invention, le serveur peut mettre en oeuvre un procédé de type IVR pour faire préciser à l'utilisateur parmi les émetteurs des composantes du message vocal, celui avec lequel il souhaite communiquer.

Selon un mode particulier de réalisation de l'invention, le serveur envoie ensuite une commande de reprise de lecture du message vocal dont la lecture a été interrompue par l'interaction utilisateur ou du message vocal suivant si la lecture du message vocal sur lequel a interagit l'utilisateur était terminée.

Selon un autre mode particulier de réalisation de l'invention, le serveur peut mettre en oeuvre un procédé de type IVR afin de demander à l'utilisateur s'il souhaite reprendre l'écoute du message vocal interrompu. La reprise de lecture du message vocal peut reprendre à l'instant où l'utilisateur a interagit ou quelques secondes avant cet instant.

En variante, la reprise de lecture d'un message vocal peut être effectuée au début de la composante vocale déterminée.

La figure 4 montre la structure d'un dispositif 48 mettant en oeuvre le procédé de consultation d'un message vocal composé selon un mode particulier de réalisation de l'invention. Le dispositif comprend une mémoire 41 comprenant une mémoire tampon (MEM), une unité de traitement 40, équipée par exemple d'un processeur (PROC), et pilotée par le programme d'ordinateur (PG) 42, mettant en oeuvre le procédé de consultation d'un message vocal composé.

A l'initialisation, les instructions de code du programme d'ordinateur 42 sont par exemple chargées dans une mémoire RAM avant d'être exécutées par le processeur de l'unité de traitement 40. Le processeur de l'unité de traitement 40 met en oeuvre les étapes du procédé de consultation d'un message vocal composé par au moins une première et une seconde composantes vocales et associé à un groupe d'informations relatives aux composantes vocales et notamment les étapes de lecture d'au moins une composante vocale du message vocal, de détection d'au moins une interaction utilisateur concomitante à la lecture de la au moins une composante vocale, d'envoi d'au moins un signal relatif à l'interaction détectée, et de réception d'une commande d'une action à effectuer relative à une composante vocale lue du message vocal et à au moins une information du groupe d'informations associé au message vocal, selon les instructions du programme d'ordinateur 42.

Pour cela, le dispositif comprend, outre la mémoire tampon 41, des moyens de communication (COM) 43. Ces moyens de communication peuvent par exemple correspondre à une interface réseau permettant au dispositif de se connecter à un réseau de communication de type Internet ou un réseau mobile ou autre.

Selon un mode particulier de réalisation de l'invention, le dispositif 48 comprend également des moyens d'acquisition 45 d'une seconde composante vocale énoncée par un utilisateur tels que par exemple un microphone (MIC) et des moyens de restitution sonore 46 du message vocal tels que par exemple un haut-parleur (HP) ou une sortie son permettant de connecter un casque.

Selon un autre mode particulier de réalisation de l'invention, le dispositif 48 comprend aussi des moyens de sélection 47 (SEL) permettant à un utilisateur de composer un code relatif à une interaction souhaitée sur une composante vocale lue ou sur le message vocal global. Ces moyens de sélection peuvent correspondre aux touches d'un clavier.

Le dispositif 48 peut par exemple correspondre à un terminal mobile ou fixe, ou un terminal de type smartphone (téléphone intelligent en anglais) ou à un ordinateur personnel.

La figure 5 montre la structure d'un dispositif 54 mettant en oeuvre le procédé de fourniture d'un message vocal composé selon un mode particulier de réalisation de l'invention. Le dispositif comprend une mémoire 51 comprenant une mémoire tampon (MEM_S), une unité de traitement 50, équipée par exemple d'un processeur (PROC_S), et pilotée par le programme d'ordinateur (PG_S) 52, mettant en oeuvre le procédé de fourniture d'un message vocal composé.

A l'initialisation, les instructions de code du programme d'ordinateur 52 sont par exemple chargées dans une mémoire RAM avant d'être exécutées par le processeur de l'unité de traitement 50. Le processeur de l'unité de traitement 50 met en oeuvre les étapes du procédé de fourniture d'un message vocal composé par au moins une première et une seconde composantes vocales et associé à un groupe d'informations relatives aux composantes vocales et notamment les étapes d' envoi d'au moins une composante vocale du message vocal, de réception d'au moins un signal relatif à une interaction effectuée par l'utilisateur destinataire, de détermination d'une composante vocale du message vocal sur laquelle s'applique l'interaction effectuée par l'utilisateur destinataire, d'envoi d'une commande d'une action à effectuer par le terminal de l'utilisateur destinataire, relative à la composante vocale déterminée et à au moins une information du groupe d'informations associé au message vocal, selon les instructions du programme d'ordinateur 52. Pour cela, le dispositif comprend, outre la mémoire tampon 51, des moyens de communication (COM_S) 53. Ces moyens de communication peuvent par exemple correspondre à une interface réseau permettant au dispositif de se connecter à un réseau de communication de type Internet ou un réseau mobile ou autre.

Le dispositif 54 peut par exemple correspondre à un serveur de traitement de données, tel que par exemple un serveur de messagerie vocale.

La figure 6 montre un environnement de mise en oeuvre du procédé de consultation d'un message vocal composé selon un mode particulier de réalisation de l'invention.

Le terminal 60 (Te) peut par exemple correspondre au terminal d'un utilisateur émetteur mettant en oeuvre le procédé de modification d'un message vocal composé tel que décrit à la figure 1. A la réception d'un message vocal, l'utilisateur du terminal 60 modifie ce message par exemple en ajoutant une composante vocale et l'envoie à l'utilisateur d'un terminal 48 (Td). En attendant que l'utilisateur consulte le message modifié, le message vocal composé est stocké sur un système de messagerie 61.

Selon le mode de réalisation, le système de messagerie peut comporter un serveur de messagerie vocale 54 (Smv) permettant à un utilisateur d'accéder aux messages vocaux dont il est destinataire. Le serveur de messagerie 54 peut par exemple stocker une information indiquant qu'un message vocal composé est stocké pour ce destinataire. Les différentes composantes vocales et le groupe d'information associé au message vocal composé peuvent être stockés sur un serveur de stockage 63 (Stock) auquel le serveur 54 accède lorsque le terminal 48 envoie une requête de consultation de messages reçus.

Le serveur 54 détermine que le message vocal est un message composé de plusieurs composantes vocales et est associé à un groupe d'information. Le serveur 54 met alors en oeuvre le procédé de fourniture d'un message vocal composé tel que décrit dans l'invention.

Le serveur 54 transmet au terminal 48 le message vocal composé. Le terminal 48 met alors en oeuvre le procédé de consultation d'un message vocal composé tel que décrit dans l'invention.

## Revendications

1. Procédé de consultation d'un message vocal reçu, le message vocal est composé par au moins deux composantes vocales, ledit procédé de consultation étant **caractérisé en ce que** le message vocal est associé à un groupe d'informations relatives aux composantes vocales permettant de distinguer dans le message vocal les composantes vocales, et **en ce qu'**il comprend les étapes suivantes:
lecture (20) par un terminal d'au moins une composante vocale du message vocal,
détection (21) d'au moins une interaction utilisateur concomitante à la lecture de la au moins une composante vocale,
- envoi (22) à un serveur de messagerie d'au moins un signal relatif à l'interaction détectée, de sorte que le serveur de messagerie détermine une composante vocale du message vocal sur laquelle s'applique l'interaction utilisateur détectée, réception (23) en provenance du serveur de messagerie, d'une commande d'une action à exécuter par le terminal, ladite action, étant relative à la composante vocale déterminée par le serveur de messagerie et à au moins une information du groupe d'informations associé au message vocal.

2. Procédé de consultation d'un message vocal selon la revendication 1, **caractérisé en ce qu'**en plus du signal relatif à l'interaction détectée, un indicateur de temps d'interaction relativement à la lecture du message vocal est envoyé au serveur de messagerie.

3. Procédé de consultation d'un message vocal selon la revendication 1 **caractérisé en ce que** l'action à effectuer appartient à un groupe comprenant :
- la lecture d'un flux vocal synthétisé énonçant au moins une information du groupe d'informations associée à une composante vocale lue,
- la lecture d'un flux vocal synthétisé énonçant les actions possibles applicables à la composante vocale lue,
- l'ouverture d'une application de communication,
- l'affichage d'une interface de sélection d'un mode de communication à utiliser pour communiquer avec un utilisateur émetteur de la composante vocale lue, l'affichage d'une interface de sélection d'une action applicable à la composante vocale lue.

4. Procédé de fourniture d'un message vocal à un terminal d'un utilisateur destinataire **caractérisé en ce que** le message vocal est composé par au moins deux composantes vocales et est associé à un groupe d'informations relatives aux composantes vocales permettant de distinguer dans le message vocal les composantes vocales et **en ce que** le procédé comprend les étapes suivantes :
envoi (30) d'au moins une composante vocale du message vocal,
- réception (31) d'au moins un signal relatif à une interaction effectuée par l'utilisateur destinataire,
- détermination (32) d'une composante vocale du message vocal sur laquelle s'applique l'interaction effectuée par l'utilisateur destinataire,
envoi (35) d'une commande d'une action à effectuer par le terminal de l'utilisateur destinataire, relative à la composante vocale déterminée et à au moins une information du groupe d'informations associé au message vocal.

5. Procédé de fourniture d'un message vocal selon la revendication 4 **caractérisé en ce qu'**il comprend une étape (34) de synthèse vocale d'au moins une information du groupe d'informations associée à la composante vocale déterminée.

6. Procédé de fourniture d'un message vocal selon la revendication 4 **caractérisé en ce qu'**il comprend une étape (33) de détermination d'un groupe d'actions applicables à la composante vocale déterminée, le groupe d'actions étant déterminé en fonction du groupe d'informations relatives aux composantes vocales.

7. Procédé de fourniture d'un message vocal selon la revendication 4 **caractérisé en ce que** le signal reçu relatif à une interaction effectuée par l'utilisateur destinataire correspond à un code DTMF entré par l'utilisateur destinataire ou à un signal audio énoncé par l'utilisateur destinataire.

8. Dispositif de consultation d'un message vocal reçu, le message vocal est composé par au moins deux composantes vocales, le dispositif de consultation est **caractérisé en ce que** le message vocal est associé à un groupe d'informations relatives aux composantes vocales permettant de distinguer dans le message vocal les composantes vocales et **en ce qu'**il comprend:
- des moyens de lecture d'au moins une composante vocale du message vocal,
- des moyens de détection d'au moins une interaction utilisateur et concomitante à la lecture de la au moins une composante vocale,
- des moyens d'envoi à un serveur de messagerie d'au moins un signal relatif à l'interaction détectée, de sorte que le serveur de messagerie détermine une composante vocale sur laquelle s'applique l'interaction utilisateur détectée,
- des moyens de réception, en provenance du serveur de messagerie, d'une commande d'une action à exécuter par le dispositif, ladite action étant relative à la composante vocale déterminée par le serveur de messagerie et à au moins une information du groupe d'informations associé au message vocal.

9. Terminal comprenant un dispositif selon la revendication 8.

10. Dispositif de fourniture d'un message vocal à un terminal d'un utilisateur destinataire **caractérisé en ce que** le message vocal est composé par au moins deux composantes vocales et est associé à un groupe d'informations relatives aux composantes vocales permettant de distinguer dans le message vocal les composantes vocales et **en ce que** le dispositif comprend:
- des moyens d'envoi d'au moins une composante vocale du message vocal,
- des moyens de réception d'au moins un signal relatif à une interaction effectuée par l'utilisateur destinataire,
- des moyens de détermination d'une composante vocale du message vocal sur laquelle s'applique l'interaction effectuée par l'utilisateur destinataire,
- des moyens d'envoi d'une commande d'une action à effectuer par le terminal de l'utilisateur destinataire, relative à la composante vocale déterminée et à au moins une information du groupe d'informations associé au message vocal.

11. Serveur comprenant un dispositif selon la revendication 10.

12. Programme d'ordinateur comportant des instructions pour l'exécution du procédé de consultation d'un message vocal selon l'une quelconque des revendications 1 ou 3 et/ou du procédé de fourniture d'un message vocal selon l'une quelconque des revendications 4 à 7, lorsque le programme est exécuté par un processeur.

## Patentansprüche

1. Verfahren zum Anhören einer empfangenen Sprachmitteilung, wobei die Sprachmitteilung aus mindestens zwei Sprachkomponenten besteht, wobei das Anhörverfahren **dadurch gekennzeichnet ist, dass** die Sprachmitteilung einer Gruppe von Informationen zu den Sprachkomponenten zugeordnet ist, die es ermöglichen, in der Sprachmitteilung die Sprachkomponenten zu unterscheiden, und dass es die folgenden Schritte umfasst:
- Lesen (20) mindestens einer Sprachkomponente der Sprachmitteilung durch ein Terminal,
- Erfassen (21) mindestens einer begleitenden Benutzerinteraktion zum Lesen der mindestens einen Sprachkomponente,
- Senden (22) an einen Mitteilungsserver mindestens eines Signals zu der erfassten Interaktion, so dass der Mitteilungsserver eine Sprachkomponente der Sprachmitteilung bestimmt, für die die erfasste Benutzerinteraktion angewandt wird,
- Empfangen (23) von dem Mitteilungsserver eines Befehls für eine vom Terminal auszuführende Aktion, wobei sich die Aktion auf die vom Mitteilungsserver bestimmte Sprachkomponente und auf mindestens eine Information aus der Gruppe von Informationen in Zusammenhang mit der Sprachmitteilung bezieht.

2. Verfahren zum Anhören einer Sprachmitteilung nach Anspruch 1, **dadurch gekennzeichnet, dass** zusätzlich zu dem Signal im Zusammenhang mit der erfassten Interaktion ein Zeitindikator der Interaktion in Zusammenhang mit dem Lesen der Sprachmitteilung an den Mitteilungsserver gesandt wird.

3. Verfahren zum Anhören einer Sprachmitteilung nach Anspruch 1, **dadurch gekennzeichnet, dass** die durchzuführende Aktion der Gruppe angehört, umfassend:
- das Lesen eines synthetisierten Sprachflusses, der zumindest eine Information aus der Informationsgruppe, die einer gelesenen Sprachkomponente zugeordnet ist, äußert,
- Lesen eines synthetisierten Sprachflusses, der die möglichen Aktionen äußert, die für die gelesene Sprachkomponente anwendbar sind,
- das Öffnen einer Kommunikationsanwendung,
- das Anzeigen einer Auswahlschnittstelle eines zu verwendenden Kommunikationsmodus, um mit einem Benutzer, der die gelesene Sprachkomponente sendet, zu kommunizieren,
- das Anzeigen einer Auswahlschnittstelle einer für die gelesene Sprachkomponente anwendbaren Aktion.

4. Verfahren zur Lieferung einer Sprachmitteilung an ein Terminal eines Empfängers und Benutzers, **dadurch gekennzeichnet, dass** die Sprachmitteilung aus mindestens zwei Sprachkomponenten zusammengesetzt ist und einer Gruppe von Informationen zu den Sprachkomponenten zugeordnet ist, die es ermöglichen, in der Sprachmitteilung die Sprachkomponenten zu unterscheiden, und dass das Verfahren die folgenden Schritte umfasst:
- Senden (30) mindestens einer Sprachkomponente der Sprachmitteilung,
- Empfangen (31) mindestens eines Signals zu einer Interaktion, die von dem Empfänger und Benutzer ausgeführt wurde,
- Bestimmen (32) einer Sprachkomponente der Sprachmitteilung, für die die vom Empfänger und Benutzer durchgeführte Interaktion angewandt wird,
- Senden (35) eines Befehls einer vom Terminal des Empfängers und Benutzers durchzuführenden Aktion im Zusammenhang mit der bestimmten Sprachkomponente und mit mindestens einer Information aus der der Sprachmitteilung zugeordneten Informationsgruppe.

5. Verfahren zur Lieferung einer Sprachmitteilung nach Anspruch 4, **dadurch gekennzeichnet, dass** es einen Schritt (34) der Sprachsynthese mindestens einer Information aus der Informationsgruppe, die der bestimmten Sprachkomponente zugeordnet ist, umfasst.

6. Verfahren zur Lieferung einer Sprachmitteilung nach Anspruch 4, **dadurch gekennzeichnet, dass** es einen Schritt (33) der Bestimmung einer Gruppe von Aktionen umfasst, die für die bestimmte Sprachkomponente anwendbar sind, wobei die Gruppe von Aktionen in Abhängigkeit von der Informationsgruppe zu den Sprachkomponenten bestimmt wird.

7. Verfahren zur Lieferung einer Sprachmitteilung nach Anspruch 4, **dadurch gekennzeichnet, dass** das empfangene Signal zu einer Interaktion, die von dem Empfänger und Benutzer durchgeführt wurde, einem DTMF-Code, der von dem Empfänger und Benutzer eingegeben wurde, oder einem Audiosignal, das von dem Empfänger und Benutzer geäußert wurde, entspricht.

8. Vorrichtung zum Anhören einer empfangenen Sprachmitteilung, wobei die Sprachmitteilung aus mindestens zwei Sprachkomponenten besteht, wobei die Anhörvorrichtung **dadurch gekennzeichnet ist, dass** die Sprachmitteilung einer Gruppe von Informationen zu den Sprachkomponenten zugeordnet ist, die es ermöglichen, in der Sprachmitteilung die Sprachkomponenten zu unterscheiden, und dass sie umfasst:
- Mittel zum Lesen mindestens einer Sprachkomponente der Sprachmitteilung,
- Mittel zum Erfassen mindestens einer begleitenden Benutzerinteraktion zum Lesen der mindestens einen Sprachkomponente,
- Mittel zum Senden an einen Mitteilungsserver mindestens eines Signals zu der erfassten Interaktion, so dass der Mitteilungsserver eine Sprachkomponente bestimmt, für die die erfasste Benutzerinteraktion angewandt wird,
- Mittel zum Empfangen eines Befehls von dem Mitteilungsserver für eine von der Vorrichtung auszuführende Aktion, wobei sich die Aktion auf die vom Mitteilungsserver bestimmte Sprachkomponente und auf mindestens eine Information aus der Gruppe von Informationen in Zusammenhang mit der Sprachmitteilung bezieht.

9. Terminal, umfassend eine Vorrichtung nach Anspruch 8.

10. Vorrichtung zur Lieferung einer Sprachmitteilung an ein Terminal eines Empfängers und Benutzers, **dadurch gekennzeichnet, dass** die Sprachmitteilung aus mindestens zwei Sprachkomponenten zusammengesetzt ist und einer Gruppe von Informationen zu den Sprachkomponenten zugeordnet ist, die es ermöglichen, in der Sprachmitteilung die Sprachkomponenten zu unterscheiden, und dass die Vorrichtung umfasst:
- Mittel zum Senden mindestens einer Sprachkomponente der Sprachmitteilung,
- Mittel zum Empfangen mindestens eines Signals zu einer Interaktion, die von dem Empfänger und Benutzer ausgeführt wurde,
- Mittel zum Bestimmen einer Sprachkomponente der Sprachmitteilung, für die die vom Empfänger und Benutzer durchgeführte Interaktion angewandt wird,
- Mittel zum Senden eines Befehls einer vom Terminal des Empfängers und Benutzers durchzuführenden Aktion im Zusammenhang mit der bestimmten Sprachkomponente und mit mindestens einer Information aus der der Sprachmitteilung zugeordneten Informationsgruppe.

11. Server, umfassend eine Vorrichtung nach Anspruch 10.

12. Computerprogramm, umfassend Befehle für die Ausführung des Verfahrens zum Anhören einer Sprachmitteilung nach einem der Ansprüche 1 oder 3 und/oder des Verfahrens zur Lieferung einer Sprachmitteilung nach einem der Ansprüche 4 bis 7, wenn das Programm von einem Prozessor ausgeführt wird.

## Claims

1. Method for consulting a voice message received, the voice message is compounded of at least two voice components, said consultation method being **characterized in that** the voice message is associated with a group of items of information relating to the voice components that makes it possible to distinguish the voice components in the voice message and **in that** it comprises the following steps:
- reading (20) by a terminal of at least one voice component of the voice message,
- detection (21) to a messaging server of at least one user interaction concomitant upon the reading of the at least one voice component,
- dispatching (22) of at least one signal relating to the interaction detected, so that the messaging server determines a voice component of the voice message, to which the user interaction detected is applied,
- reception (23) from the messaging server of a command of an action to be executed by the terminal, said action relating to the voice component determined by the messaging server and to at least one item of information of the group of items of information associated with the voice message.

2. Method for consulting a voice message according to Claim 1, **characterized in that**, in addition to the signal relating to the interaction detected, an indicator of interaction time in relation to the reading of the voice message is dispatched to the messaging server.

3. Method for consulting a voice message according to Claim 1, **characterized in that** the action to be performed belongs to a group comprising:
- the reading of a synthesized voice stream stating at least one item of information of the group of items of information associated with a voice component read,
- the reading of a synthesized voice stream stating the possible actions applicable to the voice component read,
- the opening of a communication application,
- the displaying of an interface for selecting a mode of communication to be used to communicate with a sender user who emitted the voice component read,
- the displaying of an interface for selecting an action applicable to the voice component read.

4. Method for providing a voice message to a terminal of a recipient user, **characterized in that** the voice message is compounded of at least two voice components and is associated with a group of items of information relating to the voice components that makes it possible to distinguish the voice components in the voice message and **in that** the method comprises the following steps:
- dispatching (30) of at least one voice component of the voice message,
- reception (31) of at least one signal relating to an interaction performed by the recipient user,
- determination (32) of a voice component of the voice message, to which the interaction performed by the recipient user is applied,
- dispatching (35) of a command of an action to be performed by the terminal of the recipient user, relating to the voice component determined and to at least one item of information of the group of items of information associated with the voice message.

5. Method for providing a voice message according to Claim 4, **characterized in that** it comprises a step (34) of voice synthesis of at least one item of information of the group of items of information associated with the voice component determined.

6. Method for providing a voice message according to Claim 4, **characterized in that** it comprises a step (33) of determining a group of actions applicable to the voice component determined, the group of actions being determined as a function of the group of items of information relating to the voice components.

7. Method for providing a voice message according to Claim 4, **characterized in that** the signal received relating to an interaction performed by the recipient user corresponds to a DTMF code entered by the recipient user or to an audio signal spoken by the recipient user.

8. Device for consulting a voice message received, the voice message is compounded of at least two voice components, the consultation device is **characterized in that** the voice message is associated with a group of items of information relating to the voice components that makes it possible to distinguish the voice components in the voice message and **in that** it comprises:
- means for reading at least one voice component of the voice message,
- means for detecting at least one user interaction concomitant upon the reading of the at least one voice component,
- means for dispatching to a messaging server at least one signal relating to the interaction detected, so that the messaging server determines a voice component to which the user interaction is applied,
- means for receiving from the messaging server a command of an action to be executed by the device, said action relating to the voice component determined by the messaging server and to at least one item of information of the group of items of information associated with the voice message.

9. Terminal comprising a device according to Claim 8.

10. Device for providing a voice message to a terminal of a recipient user, **characterized in that** the voice message is compounded of at least two voice components and is associated with a group of items of information relating to the voice components that makes it possible to distinguish the voice components in the voice message and **in that** the device comprises:
- means for dispatching at least one voice component of the voice message,
- means for receiving at least one signal relating to an interaction performed by the recipient user,
- means for determining a voice component of the voice message, to which the interaction performed by the recipient user is applied,
- means for dispatching a command of an action to be performed by the terminal of the recipient user, relating to the voice component determined and to at least one item of information of the group of items of information associated with the voice message.

11. Server comprising a device according to Claim 10.

12. Computer program comprising instructions for the execution of the method for consulting a voice message according to either one of Claims 1 and 3 and/or of the method for providing a voice message according to any one of Claims 4 to 7, when the program is executed by a processor.
